(19)

Europäisches
Patentamt
European
Patent Office
Office européen
des brevets

(11) **EP 4 755 938 A1**

(12) **EUROPEAN PATENT APPLICATION**

(43) Date of publication:
**10.06.2026 Bulletin 2026/24**

(21) Application number: 25151406.3

(22) Date of filing: **13.01.2025**

(51) International Patent Classification (IPC):
*C08G 18/12* (2006.01)   *C08G 18/30* (2006.01)
*C08G 18/36* (2006.01)   *C08G 18/40* (2006.01)
*C08G 18/42* (2006.01)   *C08G 18/48* (2006.01)
*C08G 18/62* (2006.01)   *C08G 18/76* (2006.01)
*C09J 175/06* (2006.01)   *C09J 175/08* (2006.01)

(52) Cooperative Patent Classification (CPC):
**C08G 18/7671; C08G 18/12; C08G 18/307;
C08G 18/36; C08G 18/4018; C08G 18/4202;
C08G 18/4238; C08G 18/4825; C08G 18/6254;
C09J 175/06; C09J 175/08;** C08G 2170/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.12.2024 CN 202411785411**

(71) Applicant: **BOSTIK SA
92800 Puteaux (FR)**

(72) Inventors:
• **CAO, Sheng
  SHANGHAI 201108 (CN)**
• **JIA, Chengliang
  SHANGHAI 201108 (CN)**

(74) Representative: **Arkema Patent
Arkema France
DRD-DPI
51, Esplanade du Général de Gaulle
CS 10478
92907 Paris La Défense Cedex (FR)**

(54) **REACTIVE POLYURETHANE HOT MELT ADHESIVE COMPOSITION, PROCESS FOR PREPARING THE SAME, ARTICLE AND USE**

(57)    The present invention relates to a reactive polyurethane hot melt adhesive composition prepared by a first raw material comprising: component (1) an isocyanate-terminated prepolymer E1 comprising a first reaction product of a polyol with a polyisocyanate D1; and component (2), which is either component (2-1): a polyether polyol A2, a polyester polyol B2, a thermoplastic resin C2, and a polyisocyanate D2, or component (2-2): an isocyanate-terminated prepolymer E2, which is different from the isocyanate-terminated prepolymer E1. The invention also relates to a process for preparing the reactive polyurethane hot melt adhesive composition, an article comprising the same, and use. The adhesive layer formed by the reactive polyurethane hot melt adhesive composition of the present invention has excellent creep resistance.

EP 4 755 938 A1

**Description**

## TECHNICAL FIELD

The present invention relates to the field of adhesives. In particular, the present invention relates to a reactive polyurethane hot melt adhesive composition, a process for preparing the same, an article comprising an adhesive layer formed by the reactive polyurethane hot melt adhesive composition, and use of an isocyanate-terminated prepolymer as defined in a reactive polyurethane hot melt adhesive composition for improving creep resistance of an adhesive layer formed by the reactive polyurethane hot melt adhesive composition.

## BACKGROUND

Reactive polyurethane hot melt adhesives (HMPUR) are widely used in the field of electronic component assembly, especially in the field of acoustic electronic component assembly. In these applications, electronic components are often subjected to a high-temperature and high-humidity (85°C/85% RH) environment. Long-term exposure to such an environment can lead to de-bonding of the adhesives that is used for bonding the electronic components or for sealing and air leakage, which in turn can lead to performance degradation of the product, or even product damage. Therefore, the properties of the adhesive needs to be further improved. In practice, the properties of the adhesive in this regard is often reflected by the ability of the bonded area formed by the adhesive to withstand shear forces continuously under a high-temperature and high-humidity (85°C/85% RH) environment (called as creep resistance) by researchers. The creep resistance of the hot melt polyurethane adhesives is generally improved by adopting the following two ways in the prior art: one is to increase the content of isocyanates such as diphenylmethane diisocyanate (MDI), but this way easily causes a large number of bubbles to be generated after the adhesive is cured, and thus increases the possibility of air leakage, and affects the appearance; and another is to increase the content of raw materials with a high melting point, but this way tends to cause a decrease in wettability or an increase in viscosity of the adhesive. The former leads to a reduction in assembly time (also called as open time), and thus affects the processing properties of the adhesive, while the latter affects the coating process performance of the adhesive.

In view of the deficiencies of the prior art, there still needs to find a new reactive polyurethane hot melt adhesive that at least partially addresses at least one of the above-mentioned deficiencies. In particular, there still needs to provide a new reactive polyurethane hot melt adhesive that is able to impart excellent creep resistance.

## SUMMARY OF THE INVENTION

The present disclosure is made in view of the problems existing in the prior art.

In a first aspect, the present invention relates to a reactive polyurethane hot melt adhesive composition prepared by a first raw material comprising:

component (1):
an isocyanate-terminated prepolymer E1 comprising a first reaction product of a polyol comprising a polyether polyol A1, a polyester polyol B1, or a combination thereof, with a polyisocyanate D1; and
component (2):
which is
either component (2-1):

- a polyether polyol A2;
- a polyester polyol B2;
- a thermoplastic resin C2; and
- a polyisocyanate D2, in an amount such that the NCO/OH molar ratio R2-1 of the total amount of isocyanate groups contained in the component (2-1) to the total amount of hydroxyl groups contained in the component (2-1) is strictly greater than 1, preferably greater than or equals to 1.5;

or component (2-2):

- an isocyanate-terminated prepolymer E2, which is different from the isocyanate-terminated prepolymer E1, and is prepared by a second raw material comprising a polyether polyol A2, a polyester polyol B2, a thermoplastic resin C2, and a polyisocyanate D2.

In some embodiments, the first raw material comprises:

- the polyether polyol A2;
- the polyester polyol B2;
- the thermoplastic resin C2;
- the polyisocyanate D2, in an amount such that the NCO/OH molar ratio R2-1 of the total amount of isocyanate groups contained in the component (2-1) to the total amount of hydroxyl groups contained in the component (2-1) is strictly greater than 1, preferably greater than or equals to 1.5; and
- the isocyanate-terminated prepolymer E1.

In some embodiments, the first raw material comprises:

- the isocyanate-terminated prepolymer E1; and
- the isocyanate-terminated prepolymer E2.

The inventors have studied and found that the adhesive layer formed by the reactive polyurethane hot melt adhesive composition of the present invention exhibits excellent creep resistance, even without increasing the content of isocyanates or raw materials with a high melting point.

In addition, the reactive polyurethane hot melt adhesive composition of the present invention also exhibits at least one of the following advantages:

- an excellent bonding strength, preferably a bonding strength of at least 5 MPa, at least 6 MPa, or at least 6.5 MPa on a polycarbonate substrate;
- very little bubble generation;
- excellent aging resistance;
- a suitable viscosity, preferably a viscosity of 1500-3800 mPa.s, preferably 2000-3500 mPa.s at 110°C;
- a suitable assembly time; and
- a bio-content of more than 60% by weight, preferably more than 70% by weight, based on the total weight of the reactive polyurethane hot melt adhesive composition.

In a second aspect, the invention relates to a process for preparing the reactive polyurethane hot melt adhesive composition as defined herein, comprising:

mixing an isocyanate-terminated prepolymer E1 and an isocyanate-terminated prepolymer E2;

or

i) mixing a polyether polyol A2, a polyester polyol B2 and a thermoplastic resin C2 to obtain a mixture; and

ii) adding a polyisocyanate D2 and an isocyanate-terminated prepolymer E1 to the mixture, preferably, adding the polyisocyanate D2 first and then the isocyanate-terminated prepolymer E1,

wherein the isocyanate-terminated prepolymer E1 comprises the reaction product of a polyol comprising a polyether polyol A1, a polyester polyol B1, or a combination thereof, with a polyisocyanate D1.

In a third aspect, the invention relates to an article comprising:

a first substrate;

a second substrate; and

an adhesive layer formed on the interface between the first substrate and the second substrate by curing the reactive polyurethane hot melt adhesive composition as defined herein.

In a fourth aspect, the present invention provides use of the isocyanate-terminated prepolymer E1 as defined herein in a reactive polyurethane hot melt adhesive composition for improving creep resistance of an adhesive layer formed by the reactive polyurethane hot melt adhesive composition.

## DETAILED DESCRIPTION

In the description and claims of this application, the following terms and expressions are to be understood as indicated.

In the present application, the terms "comprising", "including", "containing", and grammatical equivalents thereof are to be understood as inclusive or open-ended terms that do not exclude additional, unrecited elements or process steps. They may be understood to encompass the more restrictive terms "consisting of" and "consisting essentially of".

It will be understood that any numerical range recited herein includes all subranges within that range and any combination of the various endpoints of such ranges or subranges. For example, the range "1 to 5" may encompass not only the endpoints 1 and 5 and any values therebetween, but also ranges such as "1 to 4", "1 to 3", "1 to 2", "2 to 4", and "2 to 3".

Other than in the working examples or where otherwise indicated, all numbers expressing amounts of materials, temperatures, time durations, quantified properties of materials, and so forth, stated in the description and claims are to be understood as being modified in all instances by the term "about" whether or not the term "about" is used in the expression. The term "about" includes a deviation of $\pm$ 5%, $\pm$ 4%, $\pm$ 3%, $\pm$ 2%, or $\pm$ 1% from the stated numerical value.

In the present application, the terms "first" and "second" and the numbers used in the expressions "polyether polyol A1" and "polyether polyol A2", "polyester polyol B1" and "polyester polyol B2", "polyisocyanate D1" and "polyisocyanate D2" and the like are only for the purpose of distinguishing one substance from another, and should not be construed as limiting the present invention.

In the present application, unless otherwise specified, a temperature refers to room temperature (25°C), a pressure refers to atmospheric pressure, and an atmosphere refers to atmospheric atmosphere (ambient atmosphere).

In the present application, the term "(meth)acrylic resin" refers to a polymer obtained by polymerizing (meth) acrylic acid or (meth)acrylic acid derivatives as monomers, or by copolymerizing them as the main components with other unsaturated compounds. Preferably, said polymer contains hydroxyl groups. In the present application, "(meth)acrylic acid" means methacrylic acid, acrylic acid, or both. The term (meth)acrylate has a similar meaning.

In the present application, "crystalline polyester polyol" refers to a polyester polyol that exhibits a melting transition when measured using differential scanning calorimetry (DSC).

In the present application, the term "assembly time (or open time)" refers to the time that can be left for workers to adjust and assemble an adherend without occurring a curing phenomenon after the adhesive has been applied to surface of the adherend.

In the context of the present invention, unless otherwise stated, when referring to the NCO/OH molar ratio R of a component, it refers to the molar ratio of the total amount of isocyanate groups (NCO) contained in the raw materials corresponding to that component to the total amount of hydroxyl groups (OH) contained therein.

The present invention generally relates to a reactive polyurethane hot melt adhesive composition, a process for preparing the same, an article comprising an adhesive layer formed by the reactive polyurethane hot melt adhesive composition, and use of an isocyanate-terminated prepolymer E1 in a reactive polyurethane hot melt adhesive composition for improving creep resistance of an adhesive layer formed by the reactive polyurethane hot melt adhesive composition. The present invention will be described in detail below.

**Reactive polyurethane hot melt adhesive composition**

In the first aspect, the present invention provides a reactive polyurethane hot melt adhesive composition prepared by a first raw material comprising:

component (1):

an isocyanate-terminated prepolymer E1 comprising a first reaction product of a polyol comprising a polyether polyol A1, a polyester polyol B1, or a combination thereof, with a polyisocyanate D1; and

component (2):
which is
either component (2-1):

- a polyether polyol A2;
- a polyester polyol B2;
- a thermoplastic resin C2; and
- a polyisocyanate D2, in an amount such that the NCO/OH molar ratio R2-1 of the total amount of isocyanate groups contained in the component (2-1) to the total amount of hydroxyl groups contained in the component (2-1) is strictly greater than 1, preferably greater than or equals to 1.5;

or component (2-2):

- an isocyanate-terminated prepolymer E2, which is different from the isocyanate-terminated prepolymer E1, and is prepared by a second raw material comprising a polyether polyol A2, a polyester polyol B2, a thermoplastic resin C2, and a polyisocyanate D2.

The inventors have studied and found that the adhesive layer formed by the reactive polyurethane hot melt adhesive composition of the present invention exhibits excellent creep resistance, even without increasing the content of isocyanates or raw materials with a high melting point. At the same time, the adhesive layer exhibits an excellent bonding strength and can realize little bubble generation. In addition, the reactive polyurethane hot melt adhesive composition of the present invention exhibits an excellent aging resistance, suitable viscosity and suitable assembly time, and has a high bio-content.

It should be noted that the term "strictly greater than 1" means that the NCO/OH molar ratio R2-1 is greater than 1 (excluding the endpoint), preferably greater than 1.05, in order to ensure that the prepolymer prepared by the raw materials including the polyether polyol A2, the polyester polyol B2, the thermoplastic resin C2 and the polyisocyanate D2 is an isocyanate-terminated prepolymer. This would be advantageous because the isocyanate-terminated prepolymer can react with moisture in the air or on the surface of the substrate to produce a strong adhesion. The NCO/OH molar ratio R2-1 may be, for example, 1.05-4.5, preferably 1.2-4.0. As an example, the NCO/OH molar ratio R2-1 can be 1.05, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, or within a range defined by any two of them. Preferably, R2-1 is greater than or equals to 1.5, preferably 1.5-4.5, more preferably 2.0-4.0. Within the above range of the NCO/OH molar ratio R2-1, the obtained reactive polyurethane hot melt adhesive composition can advantageously produce a stronger adhesion through the reaction of the prepolymer with moisture in the air or on the surface of the substrate. On the other hand, the obtained reactive polyurethane hot melt adhesive composition does not contain too many isocyanate monomers, thereby reducing or even avoiding harm to the environment and health of the workers due to excessive volatility of the isocyanate monomers.

The first raw material may or may not include the isocyanate-terminated prepolymer E2.

In a first embodiment, the first raw material comprises (or alternatively, consists of):

- the isocyanate-terminated prepolymer E1; and
- component (2-1):

  - the polyether polyol A2;
  - the polyester polyol B2;
  - the thermoplastic resin C2;
  - the polyisocyanate D2, in an amount such that the NCO/OH molar ratio R2-1 of the total amount of isocyanate groups contained in the component (2-1) to the total amount of hydroxyl groups contained in the component (2-1) is strictly greater than 1, preferably greater than or equals to 1.5.

In a second embodiment, the first raw material comprises:

- the isocyanate-terminated prepolymer E1; and
- component (2-2):

  - the isocyanate-terminated prepolymer E2.

Preferably, the first raw material consists of the isocyanate-terminated prepolymer E1 and the isocyanate-terminated prepolymer E2 (component 2-2).

*First embodiment: with component (2-1)*

Preferably, the first raw material of the first embodiment comprises (or alternatively, consists of), based on the total weight of the first raw material:

- 2-40 wt %, preferably 5-30 wt %, more preferably 8-25 wt %, more preferably 10-20 wt %, of the isocyanate-terminated prepolymer E1;
- 10-70 wt %, preferably 10-60 wt %, more preferably 15-50 wt %, of the polyether polyol A2;
- 10-60 wt %, preferably 10-50 wt %, more preferably 15-45 wt %, of the polyester polyol B2;
- 2-20 wt %, preferably 2-15 wt %, more preferably 5-10 wt %, of the thermoplastic resin C2; and
- 8-50 wt %, preferably 10-40 wt %, more preferably 10-20 wt %, of the polyisocyanate D2.

As an example, the amount of the isocyanate-terminated prepolymer E1 can be 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40 wt%, or within a range defined by any two of them, based on the total weight of the first raw material.

As an example, the amount of the polyether polyol A2 can be 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70 wt%, or within a range defined by any two of them, based on the total weight of the first raw material.

As an example, the amount of the polyester polyol B2 can be 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60 wt%, or within a range defined by any two of them, based on the total weight of the first raw material.

As an example, the amount of the thermoplastic resin C2 can be 2, 3, 4, 5, 6, 7, 8, 9, 10, 11, 12, 13, 14, 15, 16, 17, 18, 19, 20 wt%, or within a range defined by any two of them, based on the total weight of the first raw material.

As an example, the amount of the polyisocyanate D2 can be 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50 wt%, or within a range defined by any two of them, based on the total weight of the first raw material.

Preferably, the weight ratio of the isocyanate-terminated prepolymer E1 to the total amount of the polyether polyol A2, the polyester polyol B2, the thermoplastic resin C2 and the polyisocyanate D2 is 1:3 to 1:10, preferably 1:4 to 1:8, such as 1:3, 1:4, 1:5, 1:6, 1:7, 1:8, 1:9, 1:10, or within a range defined by any two of them.

Advantageously, when the composition of the first raw material is within the content and/or ratio ranges as described above, the creep resistance of the adhesive layer formed by the reactive polyurethane hot melt adhesive composition can be better improved.

Preferably, the amount of the isocyanate-terminated prepolymer E1 can be 10-20% by weight, based on the total weight of the first raw material. Advantageously, when the amount of the isocyanate-terminated prepolymer E1 is within this range, further improved creep resistance is advantageously obtained.

Preferably, the combined weight fraction of the isocyanate-terminated prepolymer E1, the polyether polyol A2, the polyester polyol B2, the thermoplastic resin C2 and the polyisocyanate D2 is in the range of 80-100 wt%, preferably 80-99.9 wt%, or 85-99.5 wt%, based on the total weight of the first raw material. As an example, the combined mass fraction can be 80, 81, 82, 83, 84, 85, 86, 87, 88, 89, 90, 91, 92, 93, 94, 95, 96, 97, 98, 99, 99.1, 99.2, 99.5, 99.8, 99.9, 100 wt%, or within a range defined by any two of them.

Preferably, the NCO/OH molar ratio R2-1 of the total amount of isocyanate groups contained in the component (2-1) to the total amount of hydroxyl groups contained in the component (2-1) is in the range of 1.5-4.5, preferably in the range of 2.0-4.0.

*Second embodiment: with component (2-2)*

Preferably, the first raw material of the second embodiment comprises (or alternatively, consists of), based on the total weight of the first raw material:

- 2-40 wt %, preferably 5-30 wt %, more preferably 8-25 wt %, more preferably 10-20 wt %, of the isocyanate-terminated prepolymer E1; and
- 60-98 wt %, preferably 70-95 wt %, more preferably 75-92 wt %, of the isocyanate-terminated prepolymer E2.

For example, based on the total weight of the first raw material, the amounts of each component can be as follows:

- the isocyanate-terminated prepolymer E1: 2-40 wt %, such as 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40 wt %, or within a range defined by any two of them;
- the isocyanate-terminated prepolymer E2: 60-98 wt %, such as 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98 wt %, or within a range defined by any two of them.

Preferably, the amount of the isocyanate-terminated prepolymer E1 can be 10-20% by weight, based on the total weight of the first raw material. Advantageously, when the amount of the isocyanate-terminated prepolymer E1 is within this range, further improved creep resistance is advantageously obtained.

Preferably, the weight ratio of the isocyanate-terminated prepolymer E1 to the isocyanate-terminated prepolymer E2 is in the range of 1:3 to 1:10, preferably in the range of 1:4 to 1:8, such as 1:3, 1:4, 1:5, 1:6, 1:7, 1:8, 1:9, 1:10, or within a range defined by any two of them.

Advantageously, when the composition of the first raw material is within the content and/or ratio ranges described above, the creep resistance of the adhesive layer formed by the reactive polyurethane hot melt adhesive composition can be better improved.

Preferably, the combined weight fraction of the isocyanate-terminated prepolymer E1 and the isocyanate-terminated prepolymer E2 is in the range of 80-100 wt%, preferably 80-99.9 wt%, or 85-99.5 wt%, based on the total weight of the first raw material. As an example, the combined mass fraction can be 80, 81, 82, 83, 84, 85, 86, 87, 88, 89, 90, 91, 92, 93, 94, 95, 96, 97, 98, 99, 99.1, 99.2, 99.5, 99.8, 99.9, 100 wt%, or within a range defined by any two of them.

Hot melt adhesive

Preferably, the total amount of isocyanate groups contained in the reactive polyurethane hot melt adhesive composition (sum of both blocked NCO groups contained in the prepolymer and free NCO groups in the adhesive composition) is in the range of 2.5 to 6.0% by weight, preferably in the range of 3.0 to 5.0% by weight, based on the total weight of the reactive polyurethane hot melt adhesive composition. Advantageously, when the amount of isocyanate groups is within the above range, it is advantageous to obtain improved creep resistance, achieve less bubble generation and a viscosity that is easier to sizing. As an example, the total amount of isocyanate groups contained in the reactive polyurethane hot melt adhesive composition can be 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0 wt %, or within a range defined by any two of them.

Preferably, the viscosity of the reactive polyurethane hot melt adhesive composition at 110°C can be 1500-3800 mPa.s, preferably 2000-3500 mPa.s. The viscosity can be measured, for example, using a Brookfield DVTII model viscometer (spindle number 27, 50 revolutions per minute).

In one embodiment, the present invention provides a reactive polyurethane hot melt adhesive composition, prepared by a process comprising the following:

    i) mixing a polyether polyol A2, a polyester polyol B2 and a thermoplastic resin C2 to obtain a mixture; and
    ii) adding a polyisocyanate D2 and an isocyanate-terminated prepolymer E1 to the mixture,

wherein the isocyanate-terminated prepolymer E1 comprises the reaction product of a polyol comprising a polyether polyol A1, a polyester polyol B1, or a combination thereof, with a polyisocyanate D1.

The order of addition of the polyisocyanate D2 and the isocyanate-terminated prepolymer E1 is not particularly limited. That is, in step ii), the polyisocyanate D2 and the isocyanate-terminated prepolymer E1 can be added in any order. For example, the polyisocyanate D2 can be added first, and then the isocyanate-terminated prepolymer E1; alternatively, the isocyanate-terminated prepolymer E1 can be added first, and then the polyisocyanate D2; alternatively, the polyisocyanate D2 and the isocyanate-terminated prepolymer E1 can be added simultaneously, or the polyisocyanate D2 and the isocyanate-terminated prepolymer E1 can be mixed before being added to the mixture obtained in step i). Preferably, the polyisocyanate D2 can be added first, and then the isocyanate-terminated prepolymer E1.

In the present invention, mixing manner of the components is not particularly limited. The mixing manners commonly used by those skilled in the art can be adopted. Preferably, stirring, shaking, grinding, and the like, can be adopted.

In step i), the polyether polyol A2, the polyester polyol B2 and the thermoplastic resin C2 can be mixed after water being removed from each of them. Alternatively, water removal can also be performed after mixing them. The water removal can be carried out, for example, at 100-160°C, preferably 130-150°C.

In the present application, prepolymers can be obtained by reacting a polyol with a polyisocyanate in such a way that the isocyanate groups are in excess relative to the hydroxyl groups.

In the present invention, the reaction conditions between the polyol and the polyisocyanate is not particularly limited. Reaction conditions commonly used by those skilled in the art can be adopted. As an example, the reaction can be carried out at a temperature in the range of 90-160°C, preferably 100-140°C. For example, the reaction temperature can be 90, 95, 100, 105, 110, 115, 120, 125, 130, 135, 140, 145, 150, 155, 160°C, or within a range defined by any two of them. Similarly, reaction time is not particularly limited. As an example, the reaction time can be 10 minutes to 15 hours, preferably 30 minutes to 6 hours. Preferably, the reaction can be carried out under vacuum.

In some embodiments, the isocyanate-terminated prepolymer E1 includes or alternatively is the first reaction product of:

- 0-70 wt %, preferably 0-60 wt %, of the polyether polyol A1;
- 10-90 wt %, preferably 20-80 wt %, of the polyester polyol B1; and
- 5-40 wt %, preferably 10-30 wt %, of the polyisocyanate D1,

based on the total weight of the polyether polyol A1, the polyester polyol B1, and the polyisocyanate D1.

As an example, the amount of the polyether polyol A1 can be 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70 wt %, or within a range defined by any two of them, based on the total weight of the polyether polyol A1, the polyester polyol B1, and the polyisocyanate D1.

As an example, the amount of the polyester polyol B1 can be 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90 wt %, or within a range defined by any two of them, based on the total weight of the polyether polyol A1, the polyester polyol B1, and the polyisocyanate D1.

As an example, the amount of the polyisocyanate D1 can be 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40 wt %, or within a range defined by any two of them, based on the total weight of the polyether polyol A1, the polyester polyol B1, and the polyisocyanate D1.

Preferably, the NCO/OH molar ratio R1 of the total amount of isocyanate groups contained in the polyisocyanate D1 used to form the isocyanate-terminated prepolymer E1 to the total amount of hydroxyl groups contained in the polyol(s) used to form the isocyanate-terminated prepolymer E1 is in the range of 2.0 to 4.0. As an example, the NCO/OH molar ratio R1 can be 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, or within a range defined by any two of them.

In the above second embodiment, the reactive polyurethane hot melt adhesive composition of the present invention includes an isocyanate-terminated prepolymer E2, and the isocyanate-terminated prepolymer E2 is prepared from a second raw material including or being the following: the polyether polyol A2, the polyester polyol B2, the thermoplastic resin C2, and the polyisocyanate D2.

Preferably, the second raw material comprises (or alternatively, consists of):

- 5-40 wt %, preferably 10-35 wt %, of the polyether polyol A2;
- 10-60 wt %, preferably 20-55 wt %, of the polyester polyol B2;
- 2-20 wt %, preferably 5-15 wt %, of the thermoplastic resin C2; and
- 5-35 wt %, preferably 10-25 wt %, of the polyisocyanate D2,

based on the total weight of the polyether polyol A2, the polyester polyol B2, the thermoplastic resin C2, and the polyisocyanate D2.

Preferably, based on the total weight of the polyether polyol A2, the polyester polyol B2, the thermoplastic resin C2, and the polyisocyanate D2, the amounts of each component can be as follows:

- the amount of the polyether polyol A2 is 5-40 wt %, such as 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40 wt %, or within a range defined by any two of them.
- the amount of the polyester polyol B2 is 10-60 wt%, such as 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60 wt%, or within a range defined by any two of them.
- the amount of the thermoplastic resin C2 is 2-20 wt %, such as 2, 3, 4, 5, 6, 7, 8, 9, 10, 11, 12, 13, 14, 15, 16, 17, 18, 19, 20 wt%, or within a range defined by any two of them.
- the amount of the polyisocyanate D2 is 5-35 wt %, such as 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35 wt%, or within a range defined by any two of them.

Preferably, the isocyanate-terminated prepolymer E2 is the reaction product of the polyether polyol A2, the polyester polyol B2, the thermoplastic resin C2, and the polyisocyanate D2 in the amounts described above.

Preferably, the NCO/OH molar ratio R2-2 of the total amount of isocyanate groups contained in the second raw material used to form the isocyanate-terminated prepolymer E2 to the total amount of hydroxyl groups contained in the second raw material is strictly greater than 1, preferably greater than 1.05, in order to ensure that the ends of the resulting prepolymer E2 are isocyanate-terminated. The NCO/OH molar ratio R2-2 can be, for example, 1.05-4.5, preferably 1.2-4.0. As an example, the NCO/OH molar ratio R2-2 can be 1.05, 1.1, 1.2, 1.3, 1.4, 1.6, 1.7, 1.8, 1.9, 2.0, 3.0, 3.1, 3.2, 3.3, 3.4, 3.5, 3.6, 3.7, 3.8, 3.9, 4.0, 4.1, 4.2, 4.3, 4.4, 4.5, or within a range defined by any two of them. Preferably, R2-2 is greater than or equals to 1.5, preferably 1.5-4.5 or 2.0-4.0.

Preferably, the NCO/OH molar ratio R1 of the isocyanate-terminated prepolymer E1 is different from the NCO/OH molar ratio R2-2 of the prepolymer E2.

Advantageously, the inventors have unexpectedly found in their studies that, by using a mixture of the polyether polyol A2 and the polyester polyol B2 at the same time, the prepared reactive polyurethane hot melt adhesive composition exhibits better comprehensive performances, especially better creep resistance, relative to the cases when the polyether polyol A2 and the polyester polyol B2 are not used at the same time, or relative to the cases when a copolymer of the polyether polyol A2 and the polyester polyol B2 is used, with all the other conditions being kept the same.

The isocyanate-terminated prepolymer E1 and the isocyanate-terminated prepolymer E2 can have the same or different number average molecular weights. Preferably, the number average molecular weight of the isocyanate-terminated prepolymer E2 is different from that of the isocyanate-terminated prepolymer E1. For example, the number average molecular weight of the isocyanate-terminated prepolymer E1 can be higher than that of the isocyanate-terminated prepolymer E2, or the number average molecular weight of the isocyanate-terminated prepolymer E2 can be higher than that of the isocyanate-terminated prepolymer E1. As an example, the number average molecular weight of the isocyanate-terminated prepolymer E1 can be 4000-7000 g/mol; and the number average molecular weight of the isocyanate-terminated prepolymer E2 can be 4000-7000 g/mol. For example, the number average molecular weight of the isocyanate-terminated prepolymer E1 and/or E2 can be 4000, 4500, 5000, 5500, 6000, 6500, 7000 g/mol, or within a range defined by any two of them.

The number average molecular weight of the reactive polyurethane hot melt adhesive composition of the present invention can be 4000-7000 g/mol, for example, 4000, 4500, 5000, 5500, 6000, 6500, 7000 g/mol, or within a range defined by any two of them. In the present application, the number average molecular weight can be determined by conventional methods in the art, for example, by size exclusion chromatography (SEC) or gel permeation chromatography (GPC).

Preferably, the isocyanate-terminated prepolymer E1 and the isocyanate-terminated prepolymer E2 have different viscosities. For example, the viscosity of the isocyanate-terminated prepolymer E1 can be greater than that of the isocyanate-terminated prepolymer E2, or the viscosity of the isocyanate-terminated prepolymer E2 can be greater than that of the isocyanate-terminated prepolymer E1. As an example, the isocyanate-terminated prepolymer E1 can have a viscosity of 1800-5000 mPa.s at 110°C; and the isocyanate-terminated prepolymer E2 can have a viscosity of 1800-5000 mPa.s at 110°C. As an example, the viscosity of the isocyanate-terminated prepolymer E1 and/or E2 at 110°C can be 1800, 2000, 2500, 3000, 3500, 4000, 4500, 5000 mPa.s, or within a range defined by any two of them.

Viscosity can be measured by conventional methods in the art, for example, by means of a Brookfield DVTII model viscometer (spindle number 27, 50 revolutions per minute).

Preferably, in the isocyanate-terminated prepolymer E1, the content of isocyanate groups is 3.0-6.0%, preferably 3.5-5.0%, based on the total weight of the isocyanate-terminated prepolymer E1. As an example, in the isocyanate-terminated prepolymer E1, the content of isocyanate groups can be 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0%, or within a range defined by any two of them.

Preferably, in the isocyanate-terminated prepolymer E2, the content of isocyanate groups is 2.5-3.5%, based on the total weight of the isocyanate-terminated prepolymer E2. As an example, in the isocyanate-terminated prepolymer E2, the content of isocyanate groups can be 2.5, 2.6, 2.7, 2.8, 2.9, 3.0, 3.1, 3.2, 3.3, 3.4, 3.5%, or within a range defined by any two of them.

In the present application, the polyether polyol is not particularly limited, and suitable polyether polyols include linear and/or branched polyethers having a plurality of ether linkages and at least two hydroxyl groups, and are substantially free of functional groups other than hydroxyl groups.

In the present application, the "polyester polyol" includes products obtained from a polybasic acid and a polyol by condensation reactions or by reaction of a polyol with lactone or hydroxycarboxylic acid compounds. In the present invention, the type of polyester polyol used is not particularly limited, and polyester polyols commonly used in the art can be used.

In the present application, the polyether polyol A1 and the polyether polyol A2 are the same as or different from each other.

In the present application, the polyether polyol A1 and the polyether polyol A2 are each independently linear or branched.

Preferably, each of the polyether polyol A1 and the polyether polyol A2 is independently selected from polyalkylene glycols, for example polyethylene glycol, polypropylene glycol such as poly(1,2-propylene glycol) and poly(1,3-propylene glycol), polybutylene glycol, polytetramethylene glycol, or a mixture thereof; an adduct of at least one compound selected from ethylene glycol, 1,2-propylene glycol, 1,3-propylene glycol, diethylene glycol, dipropylene glycol, triethylene glycol, 2-ethyl-1,3-hexanediol, 1,2,6-hexanetriol, trimethylolpropane, trimethylolethane, tris(hydroxyphenyl)propane, triethanolamine, and triisopropanolamine with at least one compound selected from ethylene oxide, propylene oxide and butylene oxide; or a mixture thereof.

Preferably, each of the polyether polyol A1 and the polyether polyol A2 independently has a hydroxyl number in the range of 10-90 mg KOH/g, preferably 40-70 mg KOH/g. For example, the hydroxyl numbers of the polyether polyol A1 and the polyether polyol A2 can each independently be 10, 15, 20, 25, 30, 35, 40, 45, 50, 55, 60, 65, 70, 75, 80, 85, 90 mg KOH/g, or within a range defined by any two of them. Hydroxyl number can be determined by conventional measuring methods in the art.

Preferably, each of the polyether polyol A1 and the polyether polyol A2 independently has a number average molecular weight of 1,500 to 5,000 g/mol, preferably 2,000 to 3,000 g/mol. Advantageously, when the number average molecular weight of the polyether polyols is within the above range, it is advantageous to obtain the desired initial tack and bonding strength of the reactive polyurethane hot melt adhesive. For example, each of the number average molecular weights of the polyether polyol A1 and the polyether polyol A2 can independently be 1500, 2000, 2500, 3000, 3500, 4000, 4500, 5000 g/mol, or within a range defined by any two of them. Number average molecular weight can be determined by conventional measuring methods in the art, for example, by size exclusion chromatography (SEC) or gel permeation chromatography (GPC).

Preferably, at least one of the polyether polyol A1, the polyester polyol B1, the polyether polyol A2 and the polyester polyol B2 is at least partially biomass-based, preferably completely biomass-based. For example, in some embodiments, at least one of the polyether polyol A1 and the polyether polyol A2 can be at least partially biomass-based, preferably completely biomass-based. The term "biomass-based" means having 0.1% or more bio-content. Preferably, the bio-content of at least one of the polyether polyol A1 and the polyether polyol A2 is above 10%, preferably above 30%, more preferably above 50%, more preferably above 80%, most preferably above 90%, above 95%, or even 100%. The bio-content can be determined according to ASTM D6866. In some embodiments, at least one of the polyester polyol B1, the polyester polyol B2, the polyester polyol B11, and the polyester polyol B12 can be at least partially biomass-based, preferably completely biomass-based. For example, the bio-content of at least one of the polyester polyol B1, the polyester polyol B2, the polyester polyol B11 and the polyester polyol B12 is above 10%, preferably above 30%, more preferably above 50%, more preferably above 80%, most preferably above 90%, above 95%, or even 100%. Preferably, the reactive polyurethane hot melt adhesive composition has a bio-content higher than 60% by weight, preferably higher than 65% by weight, more preferably higher than 70% by weight, based on the total weight of the reactive polyurethane hot melt adhesive composition.

In the present application, the polyether polyols can be commercially available, for example the polyether polyols can be the ECOPROL series such as ECOPROL H 2000 from SK Chemical, the Voranol series such as Voranol 2120P from Dow.

In the present application, the polyester polyol B1, the polyester polyol B2, the polyester polyol B11 and the polyester polyol B12 can be commercially available, for example the polyester polyols can be CTP-B2000-BS and CTP-B3500-S from XuChuan, Dynacoll series such as Dynacoll 7750 from Evonik, PE-06256 from HuaFeng, and Priplast series such as Priplast 1838 from Cargill, and the like.

In the present application, the polyester polyol B1 and the polyester polyol B2 are the same as or different from each other.

Preferably, each of the polyester polyol B1 and the polyester polyol B2 independently comprises or is at least one solid polyester polyol B11, at least one liquid polyester polyol B12, or a mixture of at least one solid polyester polyol B11 and at least one liquid polyester polyol B12, for example a mixture of the at least one solid polyester polyol B11 and the at least one liquid polyester polyol B12 in a weight ratio of 0.8-4.0, preferably 1.0-2.0. It should be noted that the solid polyester polyol B11 included in the polyester polyol B1 and the solid polyester polyol B11 included in the polyester polyol B2 can be the same or different. Similarly, the liquid polyester polyol B12 included in the polyester polyol B1 and the liquid polyester polyol B12 included in the polyester polyol B2 can be the same or different.

Those skilled in the art would readily understand that the term "solid polyester polyol" means that the polyester polyol appears as a solid at a temperature of 0°C. Similarly, the term "liquid polyester polyol" means that the polyester polyol appears as a liquid at a temperature of 0°C. As an example, when the polyester polyol B1 or the polyester polyol B2 includes or is a mixture of at least one solid polyester polyol B11 and at least one liquid polyester polyol B12, the weight ratio of the at least one solid polyester polyol B11 to the at least one liquid polyester polyol B12 can be 0.8, 0.9, 1.0, 1.1, 1.2, 1.3, 1.4, 1.5, 1.6, 1.7, 1.8, 1.9, 2.0, 2.2, 2.5, 2.8, 3.0, 3.2, 3.5, 3.8, 4.0, or within a range defined by any two of them.

Preferably, more than 60 wt% of the polyester polyol B11 is a crystalline polyester polyol, which preferably has a melting point higher than 45°C, preferably higher than 50°C. In the present application, "crystalline polyester polyol" refers to a polyester polyol that exhibits a melting transition when measured using differential scanning calorimetry (DSC). Preferably, the crystalline polyester polyol has a crystallinity of greater than or equals to 10% and preferably less than or equals to 80% as measured by DSC according to ISO 11357 (1: 2023), i.e., a semicrystalline polyester polyol. For example, 65%, 70%, 75%, 80%, 85%, 90%, 95%, or 100% of each of the polyester polyol B1 and the polyester polyol B2 is a crystalline polyester polyol. Preferably, the crystalline polyester polyol has a melting point higher than 45°C, preferably higher than 50°C, for example a melting point higher than 45°C, higher than 50°C, higher than 55°C, higher than 60°C, such as 55°C, 58°C, 60°C, 65°C, 70°C, 75°C, and 80°C. The melting point can be determined by methods commonly used in the art such as the DSC methods, for example according to ISO11357, with a heating rate of 5°C/min.

The polyester polyol B1 can be prepared by condensation reaction of at least one first polybasic acid such as a first dibasic acid, with at least one first polyol such as a first diol, or by reaction of at least one first polyol such as a first diol with at least one first lactone or first hydroxy carboxylic acid compound;

the polyester polyol B2 can be prepared by condensation reaction of at least one second polybasic acid such as a second dibasic acid, with at least one second polyol such as a second diol, or by reaction of at least one second polyol such as a second diol with at least one second lactone or second hydroxy carboxylic acid compound;

the polyester polyol B11 can be prepared by condensation reaction of at least one third polybasic acid such as a third dibasic acid, with at least one third polyol such as a third diol, or by reaction of at least one third polyol such as a third diol with at least one third lactone or third hydroxy carboxylic acid compound; or

the polyester polyol B12 can be prepared by condensation reaction of at least one fourth polybasic acid such as a fourth dibasic acid, with at least one fourth polyol such as a fourth diol, or by reaction of at least one fourth polyol such as a fourth diol with at least one fourth lactone or fourth hydroxy carboxylic acid compound.

In the present application, the first to fourth polybasic acids are the same as or different from each other, and are each independently selected from the group consisting of linear or cyclic $C_2$-$C_{40}$ (such as C2, C3, C4, C5, C6, C7, C8, C9, C10, C11, C12, C13, C14, C15, C16, C17, C18, C19, C20, C21, C22, C23, C24, C25, C26, C27, C28, C29, C30, C31, C32, C33, C34, C35, C36, C37, C38, C39, and C40) polybasic acids such as dibasic acids, for example linear (saturated or unsaturated) $C_2$-$C_{20}$ such as $C_2$-$C_{12}$ polybasic acids for example dibasic acids such as oxalic acid, malonic acid such as 1,3-malonic acid, succinic acid such as 1,4-succinic acid, pentanedioic acid such as 1,5-pentanedioic acid, adipic acid such as 1,6-adipic acid, heptanedioic acid such as 1,7-heptanedioic acid, octanedioic acid such as 1,8-octanedioic acid, azelaic acid such as 1,9-azelaic acid, sebacic acid such as 1,10-sebacic acid, undecandioic acid such as 1,11-undecandioic acid, dodecanedioic acid such as 1,12-dodecanedioic acid, tridecanedioic acid such as 1,13-tridecanedioic acid, tetradecanedioic acid such as 1,14-tetradecanedioic acid, pentadecane diacid such as 1,15-pentadecane diacid, hexadecane diacid such as 1,16-hexadecane diacid, heptadecane diacid such as 1,17-heptadecane diacid, octadecanedioic acid such as 1,18-octadecanedioic acid, nonadecanedioic acid such as 1,19-nonadecanedioic acid, eicosane diacid such as 1,20-eicosane diacid; cyclic (saturated or unsaturated) polybasic acids for example dibasic acids such as terephthalic acid, isophthalic acid, phthalic acid, naphthalenedicarboxylic acid, cyclohexane dicarboxylic acid, and the like; branched polybasic acids for example dibasic acids such as dimerized or trimerized $C_{10}$-$C_{36}$, preferably $C_{12}$-$C_{24}$ fatty acids for example dimerized or trimerized products, or partially or completely hydrogenated products of the following fatty acids: palmitoleic acid, oleic acid, linoleic acid, linolenic acid, erucic acid, oleanolic acid, preferably oleic acid, linoleic acid, linolenic acid or palmitoleic acid; or a mixture thereof.

Preferably, the first to fourth polyols are the same as or different from each other, and are each independently selected from the group consisting of $C_2$-$C_{12}$ polyols for example diols such as ethylene glycol, 1,2-propanediol, 1,3-propanediol, 1,3-butanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, or a mixture thereof.

Preferably, the first to fourth lactones are the same as or different from each other, and are each independently selected from the group consisting of $C_4$-$C_{10}$ lactone for example butyrolactone, valerolactone, caprolactone, heptalactone, octanolactone, nonanolactone, decanolactone, or a mixture thereof.

In the present application, the first to fourth hydroxy carboxylic acids are the same as or different from each other, and are each independently selected from the group consisting of $C_2$-$C_{10}$ hydroxy carboxylic acids for example hydroxyacetic acids such as 2-hydroxyacetic acid, hydroxypropionic acids such as 3-hydroxypropionic acid, hydroxybutanoic acids such as 4-hydroxybutanoic acid, hydroxypentanoic acids such as 5-hydroxypentanoic acid, hydroxyhexanoic acids such as 6-hydroxyhexanoic acid, hydroxyheptanoic acids such as 7-hydroxyheptanoic acid, hydroxyoctanoic acids such as 8-hydroxyoctanoic acid, hydroxynonanoic acids such as 8-hydroxynonanoic acid, hydroxydecanoic acids such as 10-hydroxydecanoic acid, or a mixture thereof.

In the present invention, the conditions for the condensation reaction of a polybasic acid with a polyhydric alcohol, or for the reaction of a polyhydric alcohol and lactone or hydroxycarboxylic acid compound is not particularly limited. The reaction can be carried out by methods and conditions commonly used by those skilled in the art.

Preferably, each of the polyester polyol B1, the polyester polyol B2, the polyester polyol B11, and the polyester polyol B12 independently has a hydroxyl number in the range of 20-90 mg KOH/g, preferably 25-70 mg KOH/g. For example, each of the hydroxyl numbers of the polyester polyol B1, the polyester polyol B2, the polyester polyol B11, and the polyester polyol B12 can independently be 20, 25, 30, 35, 40, 45, 50, 55, 60, 65, 70, 75, 80, 85, 90 mg KOH/g, or within a range defined by any two of them.

Preferably, each of the polyester polyol B1, the polyester polyol B2, the polyester polyol B11, and the polyester polyol B12 can independently have a number average molecular weight of 1,000-5,000 g/mol, preferably 1,500-4,000 g/mol. For example, each of the number average molecular weights of the polyester polyol B1, the polyester polyol B2, the polyester polyol B11, and the polyester polyol B12 can independently be 1000, 1500, 2000, 2500, 3000, 3500, 4000, 4500, 5000 g/mol, or within a range defined by any two of them.

In the present application, the polyether polyol A1, the polyether polyol A2, the polyester polyol B1, the polyester polyol B2, the polyester polyol B11 and the polyester polyol B12 can be subjected to water removal in a way that is conventionally used in the art before being reacted with a polyisocyanate. For example, water can be removed under vacuum at 100-180°C, preferably 130-150°C, for 1 h-8 h, preferably 1h-5h.

In the present application, the thermoplastic resin C2 can be selected from one or more of polyesters such as polycaprolactone; thermoplastic polyurethanes; vinyl compounds such as ethylene-vinyl acetate copolymer, ethylene (meth)acrylate copolymer; (meth)acrylate polymers for example poly (meth)acrylates (such as poly (e.g., C1-C10)alkyl (meth)acrylates) such as poly methyl (meth)acrylate, poly ethyl (meth)acrylate, poly n-butyl (meth)acrylate, poly isobutyl (meth)acrylate, poly n-propyl (meth)acrylate, or poly isopropyl (meth)acrylate; poly (meth) acrylic acid; copolymers of (meth)acrylic acids and (meth)acrylates (for example the aforementioned (e.g., C1-C10)alkyl (meth)acrylates); poly hydroxyalkyl (meth)acrylates for example poly C2-C10 hydroxyalkyl (meth)acrylates such as poly 2-hydroxyethyl (meth) acrylate, poly 3-hydroxypropyl (meth)acrylate, poly 4-hydroxybutyl (meth)acrylate, and the like; copolymers of hydroxyalkyl (meth)acrylate (for example, selected from one or more of C2-C10 hydroxyalkyl (meth)acrylates such as 2-hydroxyethyl (meth)acrylate, 3-hydroxypropyl (meth)acrylate, 4-hydroxybutyl (meth)acrylate) and alkyl (meth)acrylates (selected from one or more of C1-C10 alkyl (meth)acrylates such as methyl (meth)acrylate, ethyl (meth)acrylate, propyl (meth)acrylate, butyl (meth)acrylate). Preferably, (meth)acrylate polymers which preferably contain a hydroxyl group.

Those skilled in the art can easily understand that, in addition to the thermoplastic resins listed above as examples, those skilled in the art can also use other thermoplastic resins commonly used in the art as needed, and details thereof would be omitted here.

Preferably, the thermoplastic resin C2 can optionally contain reactive functional groups capable of reacting with isocyanate groups. The reactive functional groups capable of reacting with isocyanate groups include hydroxyl group, amino group, and other functional groups having active hydrogens. In the preparation of the adhesive composition of the present invention, when the thermoplastic resin C2 contains the reactive functional groups, it can react with the polyisocyanate, thereby advantageously improving the mechanical properties of the resulting prepolymer. Preferably, the reactive functional groups capable of reacting with isocyanate groups include one or both of hydroxyl group and amino group, and more preferably hydroxyl group. The inventors have found that when the thermoplastic resin C2 contains a hydroxyl group, the aging resistance of the prepared reactive polyurethane hot melt adhesive can be further improved. In the present invention, the aging resistance can be measured by methods commonly used by those skilled in the art.

Preferably, the thermoplastic resin C2 contains a hydroxyl group.

Preferably, the thermoplastic resin C2 has a hydroxyl number in the range of 0-10 mg KOH/g, preferably 2-10 mg KOH/g, more preferably 4-10 mg KOH/g. For example, the hydroxyl number of the thermoplastic resin C2 can be 0, 1, 2, 3, 4, 5, 6, 7, 8, 9, 10 mg KOH/g, or within a range defined by any two of them.

Preferably, the thermoplastic resin C2 has a weight average molecular weight of 20,000 to 120,000 g/mol, preferably 25,000 to 100,000 g/mol. For example, the weight average molecular weight of thermoplastic resin C2 can be 20,000, 25,000, 30,000, 35,000, 40,000, 45,000, 50,000, 55,000, 60,000, 65,000, 70,000, 75,000, 80,000, 85,000, 90,000, 95,000, 100,000, 110,000, 120,000 g/mol, or within a range defined by any two of them.

In the present invention, the thermoplastic resin C2 can be commercially available, for example the AC series such as AC 3820 or AC 2740 from Evonik.

Polyisocyanate refers to a compound containing two or more isocyanate groups (NCO) in the molecule, as well as oligomers or polymers formed therefrom, such as trimers. The polyisocyanate can be aliphatic, cycloaliphatic, aromatic, or a mixture thereof. The polyisocyanate can also contain other substituents, as long as these substituents do not significantly and adversely affect the properties of the reactive polyurethane hot melt adhesive composition of the present invention, such as viscosity or adhesive properties.

Preferably, the polyisocyanate D1 and the polyisocyanate D2 are the same or different from each other, and are each independently selected from aliphatic, alicyclic or aromatic polyisocyanates for example diisocyanates, such as 1,4-tetramethylene diisocyanate, 1,5-pentamethylene diisocyanate (PDI), 1,6-hexamethylene diisocyanate (HDI), 2,2,4-trimethyl-hexamethylene diisocyanate, 2,4,4-trimethyl-hexamethylene diisocyanate, dodecamethylene diisocyanate, 2-methyl-1,5-diisocyanatopentane, diphenylmethane diisocyanate and isomers thereof such as diphenylmethane-4,4'-diisocyanate, diphenylmethane-2,2'-diisocyanate, and diphenylmethane-2,4'-diisocyanate, toluene diisocyanate and isomers thereof such as toluene-2,4-diisocyanate and toluene-2,6-diisocyanate, isophorone diisocyanate, lysine diisocyanate, and hydrogenated aromatic diisocyanates such as hydrogenated MDI, and a mixture thereof.

In the present invention, the polyisocyanates can be commercially available, for example the DESMODUR series such as DESMODUR 44C from Covestro, MDI-100 from Wanhua, and Lupranate MS from BASF.

Those skilled in the art can easily understand that, in addition to the above components, the first raw material can comprise the following optional components, provided that presence of these components does not adversely affect the physical performance of the reactive polyurethane hot melt adhesive composition of the present invention such as initial tack, thermal stability, and the like: catalysts, antioxidants, tackifiers, plasticizers, stabilizers, UV absorbers, fillers, dyes, pigments, fluorescent agents, deodorants, adhesion promoters (such as silane coupling agents), surfactants, defoamers, waxes, thermoplastic resins, and the like. As an example, the first raw material may further comprise a catalyst and an antioxidant. In the present application, catalysts conventionally used in the art may be used. Some useful catalysts include, for example, nitrogen-containing compounds such as dimorpholinyl diethyl ethers such as 2,2'-dimorpholinyl diethyl ether, N-methylmorpholine, triethylamine, triethylenediamine, and the like; and organometallic compounds such as dibutyltin dilaurate and stannous octoate, and the like. Preferably, the catalyst includes ether and morpholine functional groups, such as 2,2-dimorpholinyl ethyl ether (DMDEE), di (2,6-dimethylmorpholinyl ethyl) ether, and 4,4'-(oxy-di-2,1-ethanediyl) bis-morpholine, and more preferred catalyst is 2,2-dimorpholinyl ethyl ether. The amount of the catalyst added is in the range of 0.01-1 wt%, preferably 0.03-0.3 wt%, based on the total weight of the first raw material. The antioxidant can be selected from hindered phenolic antioxidants, ketone antioxidants, amine antioxidants, etc., such as Irganox 1010 purchased from BASF. The addition of the antioxidants can protect the adhesive composition from degradation induced by, for example, heat, light or residual catalysts in the raw material. The amount of the antioxidants added is in a range of 0.01-2 wt%, for example 0.1-1.5 wt%, 0.1-1.0 wt%, such as 0.1 wt% or 0.15 wt%, based on the total weight of the first raw material. The fillers include talc, clay, silica and their treated forms, carbon black, and mica.

## Preparing process

The second aspect of the invention provides a process for preparing the reactive polyurethane hot melt adhesive composition as defined herein, comprising:

mixing an isocyanate-terminated prepolymer E1 and an isocyanate-terminated prepolymer E2; or

i) mixing a polyether polyol A2, a polyester polyol B2 and a thermoplastic resin C2; and
ii) adding a polyisocyanate D2 and an isocyanate-terminated prepolymer E1,

wherein the isocyanate-terminated prepolymer E1 comprises the reaction product of a polyol comprising a polyether polyol A1, a polyester polyol B1, or a combination thereof, with a polyisocyanate D1.

The order of addition of the polyisocyanate D2 and the isocyanate-terminated prepolymer E1 is not particularly limited. That is, in step ii), the polyisocyanate D2 and the isocyanate-terminated prepolymer E1 can be added in any order. For example, the polyisocyanate D2 can be added first, and then the isocyanate-terminated prepolymer E1; alternatively, the isocyanate-terminated prepolymer E1 can be added first, and then the polyisocyanate D2; alternatively, the polyisocyanate D2 and the isocyanate-terminated prepolymer E1 can be added simultaneously, or the polyisocyanate D2 and the isocyanate-terminated prepolymer E1 can be mixed before being added to the mixture obtained in step i). Preferably, the polyisocyanate D2 can be added first, and then the isocyanate-terminated prepolymer E1.

In a first embodiment, the preparing process of the present invention may include: mixing an isocyanate-terminated prepolymer E1 and an isocyanate-terminated prepolymer E2.

Those skilled in the art can easily understand that the preparation process of the present invention can also include the step of preparing the isocyanate-terminated prepolymer E1 and the isocyanate-terminated prepolymer E2. For example, the step of preparing the isocyanate-terminated prepolymer E1 may include providing a mixture comprising the polyether polyol A1 and the polyester polyol B1, and then adding the polyisocyanate D1. The polyether polyol A1, the polyester polyol B1 and the polyisocyanate D1 are as defined herein. Similarly, the step of preparing the isocyanate-terminated prepolymer E2 may include providing a mixture comprising the polyether polyol A2, the polyester polyol B2 and the thermoplastic resin C2, and then adding the polyisocyanate D2. The polyether polyol A2, the polyester polyol B2, the thermoplastic resin C2 and the polyisocyanate D2 are as defined herein.

In a second embodiment, the preparation process of the present invention can include: i) mixing a polyether polyol A2, a polyester polyol B2 and a thermoplastic resin C2; and ii) adding a polyisocyanate D2 and an isocyanate-terminated prepolymer E1,
wherein the isocyanate-terminated prepolymer E1 comprises the reaction product of a polyol comprising a polyether polyol A1, a polyester polyol B1, or a combination thereof, with a polyisocyanate D1.

Regarding the addition order of the isocyanate-terminated prepolymer E1 and the polyisocyanate D2, see the above description and would not be repeated here.

## Article

The third aspect of the invention provides an article comprising:

a first substrate;
a second substrate; and
an adhesive layer formed on the interface between the first substrate and the second substrate by curing the reactive polyurethane hot melt adhesive composition as defined herein.

The curing condition is not particularly limited in the present invention. The curing condition commonly used by those skilled in the art can be adopted. For example, the curing temperature can be from 20°C to 40°C; the curing time can be at least 24 hours or more; and the curing can be carried out, for example, in an ambient atmosphere.

The kinds of the first substrate and the second substrate is not particularly limited in the present invention. The substrates commonly used by those skilled in the art can be adopted. As an example, the first substrate and the second substrate are each respectively selected from various materials such as metal, glass, inorganic building material, plastic, fiber, composite material, and the like. The substrate may be subjected to corona treatment, plasma treatment, primer treatment, or the like, as desired.

In the present invention, the application method of the reactive polyurethane hot melt adhesive composition is not particularly limited. The methods commonly used by those skilled in the art can be adopted. For example, the reactive polyurethane hot melt adhesive composition of the present invention can be firstly heated and melted in a temperature range of 50-130°C, and then coated on a first substrate. Then, a second substrate is attached to the composition. Pressure is or is not applied to bond the first substrate and the second substrate, which can be selected according to the application scenario.

In the present invention, the coating manner of the reactive polyurethane hot-melt adhesive composition is not particularly limited. For example, coating can be performed using a rolling coater, a spray coater, a T-shaped die coater, a blade coater, a comma coater, or the like, or can also be performed by means of dispenser, inkjet printing, screen printing, offset printing, or the like. Preferably, coating can be performed using a piezoelectric injection system. When coating, the moisture curable polyurethane hot-melt resin composition of the present invention may be continuously or discontinuously formed on a component in various shapes such as dot, line, triangle, quadrangle, circle, curve, or the like.

In some embodiments, the article of the present invention can include, but not limited to, various electronic devices, such as mobile phone, computer, headphone, television, camera, automotive electronic component, and the like.

**Use**

The fourth aspect of the invention provides use of the isocyanate-terminated prepolymer E1 as defined herein in a reactive polyurethane hot melt adhesive composition for improving creep resistance of an adhesive layer formed by the reactive polyurethane hot melt adhesive composition.

**Examples**

The present invention will be further described in detail below with reference to the examples, so that the purposes, technical solutions and advantages of the present invention are more apparent. It should be understood that the specific examples described here are only used to illustrate the present invention and are not intended to limit the present invention.

The raw materials used in the examples are presented in Table 1.

Table 1 Raw materials used

| Raw Materials | Grade | Supplier | Chemical information |
|---|---|---|---|
| polyether polyol | ECOPROL H 2000 (bio-based) | SK Chemical | poly(1,3-propanediol), Mn = 2000, hydroxyl number = 56 mg KOH/g, 100% bio-based |
| polyester polyol (PE2000-1) | CTP-B2000-BS (bio-based) | XuChuan Chemical | aliphatic linear, sebacic acid + butanediol, Mn = 2000, Tm = 60.84°C, hydroxyl number = 56 mg KOH/g, 100% bio-based |
| polyester polyol (PE3500-1) | Dynacoll 7750 (bio-based) | Evonik | aliphatic linear, Mn = 3500, Tm = 53.7°C, hydroxyl number = 31 mg KOH/g, 100% bio-based |
| polyester polyol (PE3500-2) | CTP-B3500-S (bio-based) | XuChuan Chemical | aliphatic linear polyester polyol, sebacic acid + 1,3-propanediol, Mn = 3500, hydroxyl number = 31 mg KOH/g, Tm = 58.47°C, 100% bio-based |
| polyester polyol (PE2000-2) | PE-06256 (bio-based) | HuaFeng Chemical | aliphatic linear polyester polyol, sebacic acid + succinic acid + 1,3-propanediol, Mn = 2000, Tm = 13.68°C, hydroxyl number = 56 mg KOH/g, 100% bio-based |
| polyester polyol | Priplast 1838 (bio-based) | Cargill | dimeric acid aliphatic polyester liquid polyol, amorphous, Tg =-56.67°C, hydroxyl number = 56 mg KOH/g, 82% bio-based |
| acrylic resin | AC3820 | Evonik | Mw = 30000, powder, hydroxyl number = 8 mg KOH/g, Tg = 83°C |
| isocyanate | DESMODUR 44C | Covestro | 4,4'-diphenylmethane diisocyanate, Mw = 250 |
| antioxidant | Irganox 1010 | Basf | Mw = 1177.7, powder |

(continued)

| Raw Materials | Grade | Supplier | Chemical information |
|---|---|---|---|
| catalyst | DMDEE | Huntsman | dimorpholinyl diethyl ether, liquid |

**Measuring Methods**

(1) Viscosity

Viscosity was measured at 110°C using a Brookfield DVTII model viscometer with spindle number 27 at a speed of 50 revolutions per minute.

(2) Bonding strength

(i) Two transparent polycarbonate plates (25 mm wide x 100 mm long x 3 mm thick) were selected as substrates.
(ii) In the center of one of the polycarbonate plates, two glue lines that were parallel to the length of the substrate and spaced 11 mm apart from each other were applied, and a limiting steel wire with a length of 25 mm and a diameter of 0.2 mm was placed on each side of the two glue lines.
(iii) Another polycarbonate sheet was pressed onto the first polycarbonate sheet in a 90-degree direction to form a cruciform laminate and pressed together, such that each adhesive strip after pressing had a length of 25 mm and a width of 1 mm. The laminate was cured in an environment of 25°C and 65% relative humidity for 24 h. Then, tensile testing was carried out using MTS E44.304, a microcomputer-controlled electronic universal testing machine.
(iv) Each sample was tested in duplicate for 5 times and averaged.

(3) Creep resistance

(i) Two transparent polycarbonate plates (25 mm wide x 100 mm long x 3 mm thick) were selected as substrates. A hole with a diameter of 6 mm was punched in the middle of one end (lengthwise) of each substrate, and the center of the hole was 15 mm from the top edge.
(ii) An amount of the adhesive composition of each example was applied to the center of the first substrate, and two limiting steel wires with a length of 25 mm and a diameter of 0.2 mm were placed around the adhesive composition. Another polycarbonate plate was pressed onto the first substrate, ensuring that the second substrate was parallel to the first substrate and that the holes in both substrates were not covered. A 50 g weight was placed on the second substrate to ensure that the adhesive composition was pressed open to form a circle having a diameter of 8.5 mm. The laminate was left to cure in an environment of 25°C and 65% relative humidity for 144 hours to ensure that the adhesive composition was fully cured.
(iii) One end of the laminate was hanged in a box at 85°C and 85% relative humidity, and a 6 KG weight was hanged on the hole at the other end. Once the two substrates became detached, the weight fell off. The duration of time before the weight fell off was recorded.
(iv) Each sample was tested in duplicate for 5 times and averaged.

(4) Assembly time

(i) 5 mg of the adhesive composition was applied to a plurality of places on the glass slide, and then covered with a cover glass. Wait for 0/1/2/3/4/5.../20 minutes, respectively. Then, a weight of 200 g was placed to press the cover glass for 20 seconds.
(ii) The diameter of the adhesive composition pressed open was measured at each place until it differed by more than 30% from the diameter size at 0 minute. The waiting time corresponding to the diameter circle was recorded, and the waiting time was regarded as the assembly time of the product.

(5) Bubble testing

The bubble testing can be evaluated as follows:

(i) Continuous adhesive composition dispensing was carried out using a VERMES MDC3200 adhesive composition dispenser (a nozzle with a diameter of 0.15 mm was selected), to form a glue line with a width of 1.0-1.5 mm and a height of 0.5 mm on stainless steel.
(ii) The resulting glue line was cured at 25°C and 65% relative humidity for 4 hours.
(iii) The bubbles generated in the glue line were observed through a microscope. Foaming performance was evaluated according to whether bubbles were generated. If there were bubbles in the glue line, it was marked as the presence of bubbles; if there was no bubble in the glue line, marked as OK.

(6) Bio-content

The bio-content in the reactive polyurethane hot melt adhesive composition is the total content of the bio-based moieties in the composition. The bio-content of each component can be determined according to ASTM D6866.

(7) Molecular weight

In the present application, the weight average molecular weight and the number average molecular weight can be measured by the GPC method with the aid of a Waters gel chromatograph e2695 using polystyrene standards.

(8) NCO Content

(i) The following reagents were prepared before testing: 500 ml ethyl acetate + 6.7 g di-n-butylamine, mixed evenly to obtain a solution of di-n-butylamine.
(ii) Blank titration:

50 ml of acetone was transferred into a dry Erlenmeyer flask, and 20 ml of the solution of di-n-butylamine was added through a pipette. The mixture was stirred for 3 minutes.
6 drops of bromocresol green were added and titration was started.
Titration was carried out with 0.1 mol/L HCl until the solution turned yellow. The amount of HCl used V0 (mL) was recorded.

(iii) Sample titration:
1.0-1.5 g sample was accurately weighed into a dry Erlenmeyer flask. The sample mass M (g) was recorded. 50 ml of acetone was added to dissolve the sample. Stirring was carried out until the sample was completely dissolved.

20.00 ml of the solution of di-n-butylamine was added with a pipette and stirred for 3 minutes. 6 drops of bromocresol green were added and titration was started.
Titration was carried out with 0.1 mol/L HCl until the solution turned yellow. The amount of HCl used V1 (mL) was recorded.

The NCO content can then be calculated as follows: $\text{NCO}\% = \dfrac{(V0 - V1) * 0.42}{M}$ .

(9) Aging resistance

(i) Two transparent polycarbonate plates (25 mm wide x 100 mm long x 3 mm thick) were selected as substrates. In the center of one of the polycarbonate plates, two glue lines that were parallel to the length of the substrate and spaced 11 mm apart from each other were applied, and a limiting steel wire with a length of 25 mm and a diameter of 0.2 mm was placed on each side of the two glue lines.
(iii) Another sheet was pressed onto the first sheet in a 90-degree direction to form a cruciform laminate, such that each adhesive strip after pressing had a length of 25 mm and a width of 1 mm.
(iii) The laminate was placed into an environment of 25°C and 65% relative humidity to cure for 24 h, and then placed into an environment of 85°C and 85% relative humidity for 21 days. Afterwards, it was taken out to be cooled down at room temperature for 4 hours. Then, tensile testing was carried out.

(iv) Each sample was tested in duplicate for 5 times and averaged.

**Preparation of the prepolymer E1**

The corresponding polyols were added into the reactor according to the amounts in Table 2. Then, water removal was carried out under vacuum at 130-150°C for 2 h. Afterwards, the temperature was lowered to 90°C, and polyisocyanate (MDI) was added according to the amounts in Table 2. The reaction was carried out under vacuum at 115°C for 2 h. Prepolymer E1 was obtained after separation, which was sealed for storage.

Table 2 Raw materials for the preparation of the prepolymer E1 and their amounts

| Raw Materials | Prepolymer-1/wt% | Prepolymer-2/wt% | Prepolymer-3/wt% |
|---|---|---|---|
| ECOPROL H2000 | 50.0 | | 40.0 |
| PE2000-1 (bio-based) | | | 25.0 |
| PE3500-1 (bio-based) | | 40.0 | |
| PE3500-2 (bio-based) | | 40.0 | 15 |
| PE2000-2 (bio-based) | | | |
| Priplast 1838 (bio-based) | 27.5 | | |
| AC3820 | | | |
| Irganox 1010 | | | |
| DESMODUR 44C | 22.50 | 20.0 | 20.0 |
| DMDEE | | | |
| n (NCO)/n (OH) | 2.32 | 3.61 | 2.18 |
| NCO% | 4.31 | 4.86 | 3.64 |
| Total | 100 | 100 | 100 |
| Mn | 5682 | 5278 | 6117 |
| Bio-content | 72.55% | 80.0% | 80.0% |

**Preparation of the reactive polyurethane hot melt adhesive**

Polyether polyols, polyester polyols, thermoplastic resins and antioxidants were added into the reactor according to the amounts in Table 3. The water was then removed under vacuum at 130-150°C for 2 h. Afterwards, the temperature was lowered to 90°C and polyisocyanate (MDI) was added according to the amounts in Table 3. The reaction was carried out under vacuum at 115°C for 30 minutes. The prepolymer E1 was added, then catalyst, according to the amounts in Table 3, and kept for 0.5 h. The reactive polyurethane hot-melt adhesive was obtained by separating.

Table 3 Raw materials for the preparation of the reactive polyurethane hot melt adhesives, amounts thereof, and properties of the adhesive layers

| Raw Materials | Example 1/wt% | Example 2/wt% | Example 3/wt% |
|---|---|---|---|
| ECOPROL H2000 | 21.0 | 23 | 21 |
| PE2000-1 (bio-based) | | | |
| PE3500-1 (bio-based) | 19.83 | 19.75 | 20.03 |
| PE3500-2 (bio-based) | | | |
| PE2000-2 (bio-based) | 5.0 | 5.0 | 5.0 |
| Priplast 1838 (bio-based) | 15 | 14 | 15.0 |
| AC3820 | 8.5 | 7.33 | 7.5 |

(continued)

| Raw Materials | Example 1/wt% | Example 2/wt% | Example 3/wt% |
|---|---|---|---|
| Irganox 1010 | 0.1 | 0.1 | 0.1 |
| DESMODUR 44C | 15.5 | 15.75 | 16.30 |
| prepolymer-1 | 15.0 | | |
| prepolymer-2 | | 15.0 | |
| prepolymer-3 | | | 15.0 |
| DMDEE | 0.07 | 0.07 | 0.07 |
| n(NCO)/n(OH) | 2.33 | 2.91 | 2.3 |
| NCO% | 3.62 | 3.75 | 3.79 |
| total | 100 | 100 | 100 |
| results | | | |
| molecular weight Mn | 6029 | 6332 | 5485 |
| viscosity at 110°C/mPa.s | 2560 | 2790 | 2370 |
| bonding strength/MPa | 7.33 | 7.31 | 6.88 |
| creep resistance/hr | 20 | 34 | 49 |
| bubble testing | OK | OK | OK |
| assembly time/min | 9 | 7 | 6 |
| aging resistance/MPa | 4.68 | 4.57 | 4.21 |
| bio-content | 69.01% | 71.23% | 70.33% |

As can be seen from Table 2, the cured products of the reactive polyurethane hot melt adhesive of the present invention exhibited excellent creep resistance and excellent aging resistance, as well as excellent bonding strength, and very little bubble generation can be achieved. The creep resistance can be further improved by optimizing the amounts of various components used in the preparation of the reactive polyurethane hot melt adhesives, such as polyether polyols, polyester polyols and polyisocyanates used in the preparation of the prepolymer E1 and the prepolymer E2.

In addition, the reactive polyurethane hot melt adhesives of the present invention exhibited a high viscosity and a high initial bonding strength, as well as suitable assembly time, and also a high bio-content.

While the disclosure has been described with reference to preferred embodiments, it will be understood by those skilled in the art that various changes can be made and equivalents can be substituted for elements thereof without departing from the scope of the disclosure. In addition, many modifications can be made to adapt a particular situation or material to the teachings of the disclosure without departing from essential scope thereof. Therefore, it is intended that the disclosure not be limited to the particular embodiments disclosed as the best mode contemplated for carrying out this disclosure, but that the disclosure will embrace all embodiments falling within the scope of the appended claims.

## Claims

1.   A reactive polyurethane hot melt adhesive composition prepared by a first raw material comprising:

component (1):
an isocyanate-terminated prepolymer E1 comprising a first reaction product of a polyol comprising a polyether polyol A1, a polyester polyol B1, or a combination thereof, with a polyisocyanate D1; and
component (2):
which is
either component (2-1):

- a polyether polyol A2;
- a polyester polyol B2;
- a thermoplastic resin C2; and

- a polyisocyanate D2, in an amount such that the NCO/OH molar ratio R2-1 of the total amount of isocyanate groups contained in the component (2-1) to the total amount of hydroxyl groups contained in the component (2-1) is strictly greater than 1, preferably greater than or equals to 1.5;

or component (2-2):
an isocyanate-terminated prepolymer E2, which is different from the isocyanate-terminated prepolymer E1, and is prepared by a second raw material comprising a polyether polyol A2, a polyester polyol B2, a thermoplastic resin C2, and a polyisocyanate D2.

2. The reactive polyurethane hot melt adhesive composition according to claim 1, wherein the first raw material comprises:

- the polyether polyol A2;
- the polyester polyol B2;
- the thermoplastic resin C2;
- the polyisocyanate D2, in an amount such that the NCO/OH molar ratio R2-1 of the total amount of isocyanate groups contained in the component (2-1) to the total amount of hydroxyl groups contained in the component (2-1) is strictly greater than 1, preferably greater than or equals to 1.5; and
- the isocyanate-terminated prepolymer E1.

3. The reactive polyurethane hot melt adhesive composition according to claim 1, wherein the first raw material comprises:

- the isocyanate-terminated prepolymer E1; and
- the isocyanate-terminated prepolymer E2.

4. The reactive polyurethane hot melt adhesive composition according to any one of claims 1-3, wherein the first raw material comprises, based on the total weight of the first raw material:

- 2-40 wt %, preferably 5-30 wt %, more preferably 8-25 wt %, more preferably 10-20 wt %, of the isocyanate-terminated prepolymer E1; and
- 10-70 wt %, preferably 10-60 wt %, more preferably 15-50 wt %, of the polyether polyol A2;
- 10-60 wt %, preferably 10-50 wt %, more preferably 15-45 wt %, of the polyester polyol B2;
- 2-20 wt %, preferably 2-15 wt %, more preferably 5-10 wt %, of the thermoplastic resin C2;
- 8-50 wt %, preferably 10-40 wt %, more preferably 10-20 wt %, of the polyisocyanate D2; or, based on the total weight of the first raw material:
- 2-40 wt %, preferably 5-30 wt %, more preferably 8-25 wt %, more preferably 10-20 wt %, of the isocyanate-terminated prepolymer E1; and
- 60-98 wt %, preferably 70-95 wt %, more preferably 75-92 wt %, of the isocyanate-terminated prepolymer E2.

5. The reactive polyurethane hot melt adhesive composition according to any one of claims 1-4, wherein one, two, three, four, five, or six of the following conditions is/are satisfied:

(1) the total amount of isocyanate groups contained in the reactive polyurethane hot melt adhesive composition is in the range of 2.5-6.0 wt %, preferably in the range of 3.0-5.0 wt %, based on the total weight of the reactive polyurethane hot melt adhesive composition;
(2) the NCO/OH molar ratio R1 of the total amount of isocyanate groups contained in the polyisocyanate D1 used to form the prepolymer E1 to the total amount of hydroxyl groups contained in the polyol(s) used to form the prepolymer E1 is in the range of 2.0 to 4.0;
(3) the NCO/OH molar ratio R2-2 of the total amount of isocyanate groups contained in the second raw material to the total amount of hydroxyl groups contained in the second raw material is in the range of 1.5 to 4.5, preferably in the range of 2.0 to 4.0;
(4) the NCO/OH molar ratio R2-1 of the total amount of isocyanate groups contained in the component (2-1) to the total amount of hydroxyl groups contained in the component (2-1) is in the range of 1.5 to 4.5, preferably in the range of 2.0 to 4.0;
(5) at least one of the polyether polyol A1, the polyester polyol B1, the polyether polyol A2, and the polyester polyol B2 is at least partially bio-based, preferably entirely bio-based; and
(6) the bio-content of the reactive polyurethane hot melt adhesive composition is higher than 60 wt %, preferably higher than 70 wt %, based on the total weight of the reactive polyurethane hot melt adhesive composition.

6. The reactive polyurethane hot melt adhesive composition according to any one of claims 1-5, wherein the isocyanate-terminated prepolymer E1 comprises a first reaction product of:

- 0-70 wt %, preferably 0-60 wt %, of the polyether polyol A1;
- 10-90 wt %, preferably 20-80 wt %, of the polyester polyol B1; and
- 5-40 wt %, preferably 10-30 wt %, of the polyisocyanate D1,

based on the total weight of the polyether polyol A1, the polyester polyol B1, and the polyisocyanate D1.

7. The reactive polyurethane hot melt adhesive composition according to any one of claims 1-6, wherein the second raw material comprises:

- 5-40 wt %, preferably 10-35 wt %, of the polyether polyol A2;
- 10-60 wt %, preferably 20-55 wt %, of the polyester polyol B2;
- 2-20 wt %, preferably 5-15 wt %, of the thermoplastic resin C2; and
- 5-35 wt %, preferably 10-25 wt %, of the polyisocyanate D2,

based on the total weight of the polyether polyol A2, the polyester polyol B2, the thermoplastic resin C2, and the polyisocyanate D2.

8. The reactive polyurethane hot melt adhesive composition according to any one of claims 1-7, wherein one, two, or three of the following conditions is/are satisfied:

(7) the thermoplastic resin C2 is selected from one or more of polyesters such as polycaprolactone, thermoplastic polyurethanes, vinyl compounds such as ethylene-vinyl acetate copolymers, ethylene (meth)acrylate copolymers, (meth)acrylate polymers, preferably (meth)acrylate polymers which preferably contain a hydroxyl group;
(8) the thermoplastic resin C2 has a hydroxyl number in the range of 0-10 mg KOH/g, preferably 2-10 mg KOH/g, more preferably 4-10 mg KOH/g; and
(9) the thermoplastic resin C2 has a weight average molecular weight of 20,000 to 120,000 g/mol, preferably 25,000 to 100,000 g/mol.

9. The reactive polyurethane hot melt adhesive composition according to any one of claims 1-8, wherein one, two, three, four, or five of the following conditions is/are satisfied:

(10) the polyether polyol A1 and the polyether polyol A2 are the same as or different from each other;
(11) the polyether polyol A1 and the polyether polyol A2 are each independently linear or branched;
(12) each of the polyether polyol A1 and the polyether polyol A2 is independently selected from polyalkylene glycols, for example polyethylene glycol, polypropylene glycol such as poly(1,2-propylene glycol) and poly(1,3-propylene glycol), polybutylene glycol, polytetramethylene glycol, or a mixture thereof; an adduct of at least one compound selected from ethylene glycol, 1,2-propylene glycol, 1,3-propylene glycol, diethylene glycol, dipropylene glycol, triethylene glycol, 2-ethyl-1,3-hexanediol, 1,2,6-hexanetriol, trimethylolpropane, trimethylolethane, tris(hydroxyphenyl)propane, triethanolamine, and triisopropanolamine with at least one compound selected from ethylene oxide, propylene oxide and butylene oxide; or a mixture thereof;
(13) each of the polyether polyol A1 and the polyether polyol A2 independently has a hydroxyl number in the range of 10-90 mg KOH/g, preferably 40-70 mg KOH/g; and
(14) each of the polyether polyol A1 and the polyether polyol A2 independently has a number average molecular weight of 1,500 to 5,000 g/mol, preferably 2,000 to 3,000 g/mol.

10. The reactive polyurethane hot melt adhesive composition according to any one of claims 1-9, wherein one, two, three, four, or five of the following conditions is/are satisfied:

(15) the polyester polyol B1 and the polyester polyol B2 are the same as or different from each other;
(16) each of the polyester polyol B1 and the polyester polyol B2 independently comprises at least one solid polyester polyol B11, at least one liquid polyester polyol B12, or a mixture of at least one solid polyester polyol B11 and at least one liquid polyester polyol B12, preferably a mixture of the at least one solid polyester polyol B11 and the at least one liquid polyester polyol B12 in a weight ratio of 0.8-4.0, preferably 1.0-2.0, preferably, more than 60 wt % of the polyester polyol B11 is a crystalline polyester polyol, which preferably has a melting point higher than 45°C, preferably higher than 50°C;

(17) the polyester polyol B1 is prepared by condensation reaction of at least one first polybasic acid such as a first dibasic acid, with at least one first polyol such as a first diol, or by reaction of at least one first polyol such as a first diol with at least one first lactone or first hydroxy carboxylic acid compound;

the polyester polyol B2 is prepared by condensation reaction of at least one second polybasic acid such as a second dibasic acid, with at least one second polyol such as a second diol, or by reaction of at least one second polyol such as a second diol with at least one second lactone or second hydroxy carboxylic acid compound;

the polyester polyol B11 is prepared by condensation reaction of at least one third polybasic acid such as a third dibasic acid, with at least one third polyol such as a third diol, or by reaction of at least one third polyol such as a third diol with at least one third lactone or third hydroxy carboxylic acid compound; or

the polyester polyol B12 is prepared by condensation reaction of at least one fourth polybasic acid such as a fourth dibasic acid, with at least one fourth polyol such as a fourth diol, or by reaction of at least one fourth polyol such as a fourth diol with at least one fourth lactone or fourth hydroxy carboxylic acid compound; wherein:

the first to fourth polybasic acids are the same as or different from each other, and are each independently selected from the group consisting of linear or cyclic $C_2$-$C_{40}$ polybasic acids such as dibasic acids, for example linear $C_2$-$C_{20}$ such as $C_2$-$C_{12}$ polybasic acids for example dibasic acids such as oxalic acid, malonic acid, succinic acid such as 1,4-succinic acid, pentanedioic acid, adipic acid, azelaic acid, sebacic acid, dodecanedioic acid, tetradecanedioic acid, octadecanedioic acid; cyclic polybasic acids for example dibasic acids such as terephthalic acid, isophthalic acid, phthalic acid, and cyclohexane dicarboxylic acid; branched polybasic acids for example dibasic acids such as dimerized or trimerized $C_{10}$-$C_{36}$, preferably $C_{12}$-$C_{24}$ fatty acids for example dimerized or trimerized products of oleic acid, linoleic acid, linolenic acid, or palmitoleic acid; or a mixture thereof;

the first to fourth polyols are the same as or different from each other, and are each independently selected from the group consisting of $C_2$-$C_{12}$ polyols for example diols such as ethylene glycol, 1,2-propanediol, 1,3-propanediol, 1,4-butanediol, 1,5-pentanediol, 1,6-hexanediol, 1,8-octanediol, 1,10-decanediol, 1,12-dodecanediol, or a mixture thereof;

the first to fourth lactones are the same as or different from each other, and are each independently selected from the group consisting of $C_4$-$C_{10}$ lactone for example butyrolactone, valerolactone, caprolactone, heptalactone, decanolactone, or a mixture thereof; and

the first to fourth hydroxy carboxylic acids are the same as or different from each other, and are each independently selected from the group consisting of $C_2$-$C_{10}$ hydroxy carboxylic acids for example hydroxyacetic acids such as 2-hydroxyacetic acid, hydroxypropionic acids such as 3-hydroxypropionic acid, hydroxybutanoic acids such as 4-hydroxybutanoic acid, hydroxypentanoic acids such as 5-hydroxypentanoic acid, hydroxyhexanoic acids such as 6-hydroxyhexanoic acid, hydroxyheptanoic acids such as 7-hydroxyheptanoic acid, hydroxydecanoic acids such as 10-hydroxydecanoic acid, or a mixture thereof;

(18) each of the polyester polyol B1, the polyester polyol B2, the polyester polyol B11, and the polyester polyol B12 independently has a hydroxyl number in the range of 20-90 mg KOH/g, preferably 25-70 mg KOH/g; or

(19) each of the polyester polyol B1, the polyester polyol B2, the polyester polyol B11, and the polyester polyol B12 independently has a number average molecular weight of 1,000-5,000 g/mol, preferably 1,500-4,000 g/mol.

11. The reactive polyurethane hot melt adhesive composition according to any one of claims 1-10, wherein the polyisocyanate D1 and the polyisocyanate D2 are the same or different from each other, and are each independently selected from aliphatic, alicyclic or aromatic polyisocyanates for example diisocyanates, such as diphenylmethane diisocyanate MDI and isomers thereof such as diphenylmethane-4,4'-diisocyanate, diphenylmethane-2,2'-diisocyanate, and diphenylmethane-2,4'-diisocyanate; toluene diisocyanate and isomers thereof such as toluene-2,4-diisocyanate and toluene-2,6-diisocyanate; isophorone diisocyanate; and hydrogenated aromatic diisocyanates such as hydrogenated MDI; or a mixture thereof.

12. The reactive polyurethane hot melt adhesive composition according to any one of claims 1-11, wherein one, two or three of the following conditions is/are satisfied:

(20) the isocyanate-terminated prepolymer E1 has a number average molecular weight of 4000-7000 g/mol;
(21) the isocyanate-terminated prepolymer E2 has a number average molecular weight of 4000-7000 g/mol; and
(22) the reactive polyurethane hot melt adhesive composition has a number average molecular weight of 4000-7000 g/mol.

13. A reactive polyurethane hot melt adhesive composition, prepared by a process comprising the following:

   i) mixing a polyether polyol A2, a polyester polyol B2 and a thermoplastic resin C2 to obtain a mixture; and
   ii) adding a polyisocyanate D2 and an isocyanate-terminated prepolymer E1 to the mixture, preferably, adding the polyisocyanate D2 first and then the isocyanate-terminated prepolymer E1,

   wherein the isocyanate-terminated prepolymer E1 comprises the reaction product of a polyol comprising a polyether polyol A1, a polyester polyol B1, or a combination thereof, with a polyisocyanate D1.

14. A process for preparing the reactive polyurethane hot melt adhesive composition according to any one of claims 1-12, comprising:

   mixing an isocyanate-terminated prepolymer E1 and an isocyanate-terminated prepolymer E2; or

      i) mixing a polyether polyol A2, a polyester polyol B2 and a thermoplastic resin C2 to obtain a mixture; and
      ii) adding a polyisocyanate D2 and an isocyanate-terminated prepolymer E1 to the mixture, preferably, adding the polyisocyanate D2 first and then the isocyanate-terminated prepolymer E1,

   wherein the isocyanate-terminated prepolymer E1 comprises the reaction product of a polyol comprising a polyether polyol A1, a polyester polyol B1, or a combination thereof, with a polyisocyanate D1.

15. An article comprising:

   a first substrate;
   a second substrate; and
   an adhesive layer formed on the interface between the first substrate and the second substrate by curing the reactive polyurethane hot melt adhesive composition according to any one of claims 1-13.

16. Use of the isocyanate-terminated prepolymer E1 as defined in any one of claims 1-13 in a reactive polyurethane hot melt adhesive composition for improving creep resistance of an adhesive layer formed by the reactive polyurethane hot melt adhesive composition.

<table>
<tr><td>Europäisches Patentamt<br>European Patent Office<br>Office européen des brevets</td><td>**EUROPEAN SEARCH REPORT**</td><td>**Application Number**<br><br>EP 25 15 1406</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/152394 A1 (SLARK ANDREW [GB] ET AL) 17 June 2010 (2010-06-17)<br>* pages 6-7, par. 0063-0081, ex. 1-3, tables 3, 5, 6, formulations B, F ; claims 1, 6-9, 18-21 *<br>----- | 1-16 | INV.<br>C08G18/12<br>C08G18/30<br>C08G18/36<br>C08G18/40<br>C08G18/42 |
| X | US 2003/092831 A1 (TANGEN JOHN C [US]) 15 May 2003 (2003-05-15) | 1-3,5,6, 9-11, 13-16 | C08G18/48<br>C08G18/62<br>C08G18/76 |
| A | * pages 4-6, par. 0048-0054, table 3, ex. 6 ; claims 1-4, 18-21 *<br>----- | 4,7,8,12 | C09J175/06<br>C09J175/08 |
| A | US 8 349 123 B2 (HENKEL CORP [US]; ZHANG YUE S [US]; MOORE LOUIS A [US]) 8 January 2013 (2013-01-08)<br>* col. 9-10, ex. 4, 5, table 1, samples A-E, Fig. 2-3 *<br>----- | 1-16 | |

**TECHNICAL FIELDS SEARCHED (IPC)**

C08G
C09J

The present search report has been drawn up for all claims

| Place of search | Date of completion of the search | Examiner |
|---|---|---|
| Munich | 14 June 2025 | Stefaniu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 1406

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2025

| Patent document cited in search report | Publication date | Patent family member(s) | | Publication date |
|---|---|---|---|---|
| US 2010152394 A1 | 17-06-2010 | BR | PI0922194 A2 | 29-12-2015 |
| | | CN | 102325853 A | 18-01-2012 |
| | | EP | 2356189 A2 | 17-08-2011 |
| | | ES | 2633659 T3 | 22-09-2017 |
| | | US | 2010152394 A1 | 17-06-2010 |
| | | WO | 2010068736 A2 | 17-06-2010 |
| US 2003092831 A1 | 15-05-2003 | EP | 1414879 A1 | 06-05-2004 |
| | | JP | 2005503475 A | 03-02-2005 |
| | | KR | 20040019081 A | 04-03-2004 |
| | | US | 2003092831 A1 | 15-05-2003 |
| | | WO | 03027160 A1 | 03-04-2003 |
| US 8349123 B2 | 08-01-2013 | BR | PI0910069 A2 | 29-12-2015 |
| | | CN | 102037040 A | 27-04-2011 |
| | | EP | 2274356 A1 | 19-01-2011 |
| | | ES | 2709475 T3 | 16-04-2019 |
| | | JP | 5661606 B2 | 28-01-2015 |
| | | JP | 2011518239 A | 23-06-2011 |
| | | PL | 2274356 T3 | 28-06-2019 |
| | | US | 2009242123 A1 | 01-10-2009 |
| | | WO | 2009123905 A1 | 08-10-2009 |